# EUROPEAN PATENT APPLICATION

(11) **EP 2 178 236 A1**
(43) Date of publication of application: **21.04.2010**
(21) Application number: 08305678.8
(22) Date of filing: 14.10.2008
(51) Int. Cl.: H04L 1/00, H04L 1/16, H04L 1/18

(54) **Method and apparatus of communication using adjustable group acknowledgement protocol**

(71) Applicant: Thomson Licensing, 92443 Issy-les-Moulineaux Cedex (FR)
(72) Inventor: Wang, Xianlei, 100085, BEIJING (CN); Zhang, Zhigang, 100085, BEIJING (CN); Cheng, Linxiang, 100085, BEIJING (CN)
(74) Representative: Ruellan-Lemonnier, Brigitte

(57) **Abstract**

A method and apparatus of communication using an adjustable group acknowledgment protocol are provided. The method of communication between a transmitter and a receiver comprises the steps of: transmitting a group of frames to the receiver, concluding with a last frame indicating an end of the group; and upon reception of an acknowledgement frame transmitted from the receiver, said acknowledgment frame including frame loss information of the sent group, dynamically adapting the number of frames in subsequently sent groups based on the frame loss information. The method keeps a trade-off between frame loss rate and throughput of communication system by dynamically adjusting the size of group frame according to the feedback of the receiver on the frame loss. Embodiments of the present invention can decrease the requirement on the memory capacity and improve throughput of the network system (Fig. 10)

## Description

### FIELD OF THE INVENTION

The present invention relates generally to the field of communication, and more particularly, to a method and apparatus of communication using an adjustable group acknowledgment protocol.

### BACKGROUND OF THE INVENTION

Communication systems are known to support wireless or wired communication. An acknowledgement (ACK) protocol is used in communication systems to reduce package loss rate. In the protocol, a transmitter of the communication system transmits a data frame to a receiver, requiring the receiver to transmit an ACK frame when it has properly received the data frame so as to signal the transmitter that the data frame is received. Through the ACK mechanism, the receiver can detect a frame loss and signal the transmitter that the transmitted data frame is missing in order to trigger a retransmission of the lost data frame.

Several ACK protocols had already been proposed. A one-to-one ACK and a Block ACK protocols are known in the art.

In the one-to-one ACK protocol, each transmitted frame requires an ACK frame from the receiver of the communication system. The one-to-one ACK protocol is usually used for wireless network systems to reduce package loss rate because the wireless medium isn't as reliable as a wired one. However, using the one-to-one ACK protocol, a transmitter will have to stop transmitting until it receives the ACK frame for the most recent transmitted frame from the receiver, so that the throughput of communication system will decrease.

In order to improve channel efficiency, the Block ACK protocol was proposed in IEEE802.11e. According to the Block ACK protocol, a block of frames destined to a same receiver is sent without individual acknowledgment of each frame. After the transmission of the entire block, the transmitter initiates a Block ACK Request (BAR) frame to enquire the number of frames that have been received successfully. Then the receiver responds with a Block ACK (BA) frame. This protocol can reduce the traffic in comparison to sending immediate ACK frames one by one for each received frame. However, with the Block ACK protocol, because the receiver can't send any ACK frames during time-slots of the transmitter in order to avoid collision, the transmitter will have to buffer all frames transmitted in its timeslot period in a memory for possible retransmissions. At the same time, the receiver may also need to buffer all frames received for possible reordering of the frames in a memory. High memory capacity requirement will inevitably increase the cost of the communication system.

In view of the above problems, in one patent application of the applicant (filing number: EP08305324.9, title: a method and apparatus of communication using a group acknowledgment protocol), a method of communication between a transmitter and a receiver is proposed, in which the transmitter transmits a group of frames constituting an ordered sequence to the receiver, and the receiver will receive at least the last frame of this group. According to the method, upon detection that a frame of the group is received out of the sequence, the receiver will transmit an acknowledgement frame to the transmitter requesting retransmission of all frames of the group starting with the first frame that was not received in accordance with the sequence. Using this method, the receiver doesn't need to buffer received frames but can deliver them immediately to further processing if they are received in sequence, which will reduce the consumption of memory and shorten the delay. However, the transmitter must buffer all frames of a group in a memory for possible retransmission.

### SUMMARY OF THE INVENTION

According to one aspect of the invention, a method of communication between a transmitter and a receiver is provided. The method comprises the steps of, at the level of the transmitter: transmitting a group of frames to the receiver, concluding with a last frame indicating an end of the group; and upon reception of an acknowledgement frame transmitted from the receiver, said acknowledgment frame including frame loss information of the sent group, dynamically adapting the number of frames in subsequently sent groups based on the frame loss information.

According to another aspect of the invention, a method of communication between a transmitter and a receiver is provided. The method comprises the steps of, at the level of the transmitter: transmitting a group of frames to a plurality of receivers, concluding with a last frame indicating an end of the group; and upon reception of acknowledgement frames transmitted from the plurality of receivers, said acknowledgment frames including respectively the number of frame loss of the sent group of each of the receivers, dynamically adapting the number of frames in subsequently sent groups based on the number of frame loss indicated in one of the acknowledgement frames

According to another aspect of the invention, a method of communication between a transmitter and a receiver is provided. The method comprises the steps of, at the level of the receiver: receiving a frame of a group of frames transmitted from the transmitter, concluding with a last frame indicating an end of the group of frames; and upon reception the last frame of the transmitted group, transmitting an acknowledgement frame including frame loss information of the transmitted group to the transmitter for the transmitter to dynamically adapt the number of frames in subsequently sent groups

According to another aspect of the invention, a transmitter of communication system is provided. The transmitter comprises: a communication interface for exchanging frames with a receiver; and a processor, wherein the communication interface transmits a group of frames to the receiver, concluding with a last frame indicating an end of the group; and upon reception of an acknowledgement frame transmitted from the receiver, said acknowledgment frame including frame loss information of the sent group, the processor dynamically adapting the number of frames in subsequently sent groups based on the frame loss information.

According to another aspect of the invention, a receiver of communication system is provided. The receiver comprises: a communication interface for exchanging frames with a transmitter; and a processor, wherein the communication interface receives a group of frames from the transmitter, concluding with a last frame indicating an end of the group; and the processor determines frame loss information of the received group and instructs the communication interface to transmit an acknowledgement frame including frame loss information of the transmitted group to the transmitter for the transmitter to dynamically adapt the number of frames in subsequently sent groups.

### BRIEF DESCRIPTION OF DRAWINGS

These and other aspects, features and advantages of the present invention will become apparent from the following description in connection with the accompanying drawings in which:
Figure 1 is an exemplary diagram showing the network topology of an ADoC system;
Figure 2 is an exemplary diagram showing the workflow of the method of communication described in a patent application of the applicant;
Figure 3 is an exemplary diagram showing an adjustable group ACK protocol according to an embodiment of the present invention, illustrating the case without frame loss in a group;
Figure 4 is an exemplary diagram showing an adjustable group ACK protocol according to an embodiment of the present invention, illustrating the case with frame losses in a group;
Figure 5 is a block diagram showing the structure of an ADoC transmitter according to an embodiment of the present invention;
Figure 6 is a flow chart showing the procedure of an ADoC transmitter generating a group frame to be transmitted;
Figure 7 is an exemplary diagram showing the structure of a generic data frame defined in 802.11;
Figure 8 is an exemplary diagram showing the structure of a part of the redefined data frame carrying group ACK information according to an embodiment of the present invention;
Figure 9 is a flow chart showing the transmitter setting subfields of a data frame in group ACK mechanism;
Figure 10 is a flow chart showing the transmitter receiving an ACK frame from the receiver and adapting the size of a subsequent group;
Figure 11 is a block diagram showing the structure of an ADoC receiver according to an embodiment of the present invention;
Figure 12 is a flow chart showing the receiver processing the group ACK information;
Figure 13 is an exemplary diagram showing the structure of a part of an ACK frame transmitted by the receiver; and
Figure 14 is a flow chart showing the receiver setting subfields of an ACK frame.

### DETAIL DESCRIPTION OF PREFERRED EMBODIMENTS

In the following description, various aspects of an embodiment of the present invention will be described. For purposes of explanation, specific configurations and details are set forth in order to provide a thorough understanding. However, it will also be apparent to one skilled in the art that the present invention may be practiced without the specific details present herein.

### 1. Application scenario

To provide a cost-effective bi-directional data transmission solution over the existing coaxial cable access network, a method has been proposed, which utilizes mature commodity WiFi chipsets with external frequency conversion circuit for frames delivery. The system which employs this method is referred to as ADoC (Asymmetric Data over Coaxial Cable) system, in which a TDF (Time Division Function) protocol is deployed to allow ADoC AP (Access Point) and STAs (stations) to access the coaxial cable medium in a time-sharing mode, instead of a contention-based mode. In this way, the user at home can access the remote IP core network via the cable access network.

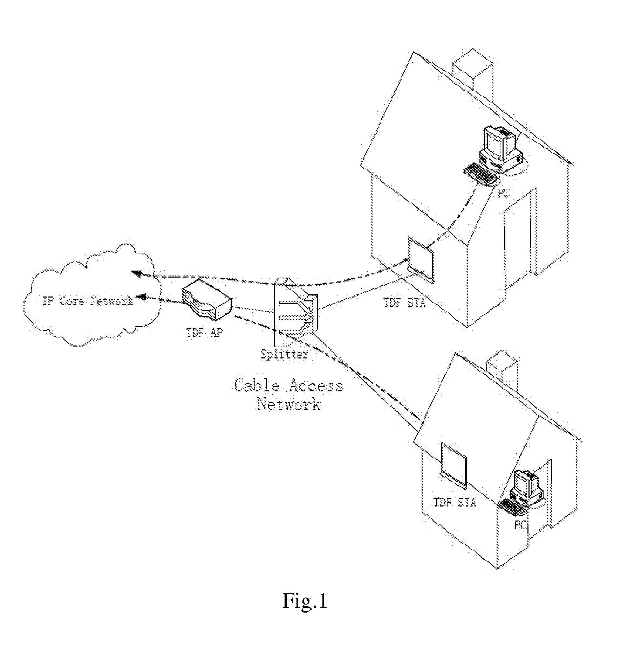

The detailed network topology is illustrated in Figure 1. As shown in Figure 1, in this typical access network infrastructure, a TDF protocol compliant AP has one Ethernet Interface (not shown) in connection with the IP core network, and one coaxial cable interface (not shown) in connection with the cable access network. On the other end of the cable access network, there are TDF protocol compliant STAs, i.e. terminals, which connect with the cable access network via the coaxial cable interface and connect with the home LAN (Local Area Network) via the Ethernet interface. In the ADoC network, the AP and its associated STAs access the coaxial cable with TDMA (Time Division Multiple Access) method to transmit frames over the coaxial cable media. The SATs transmit for uplink traffic, one after another, each using their own time slot in a TDF supper frame assigned by the AP. And for the download traffic, the STAs share the channels and select the data or management frames by comparing the destination address information in the frames with their addresses.

It is not necessary for the ADoC system to adopt the one-to-one ACK protocol because the coaxial cable has a good anti-interference characteristic and the package loss rate is rather low in comparison with wireless communication. As for the Block ACK protocol, because a large memory capacity is required to buffer frames both at the AP and the STAs, as described in the description to the background technology, it is also not technically feasible for ADoC system.

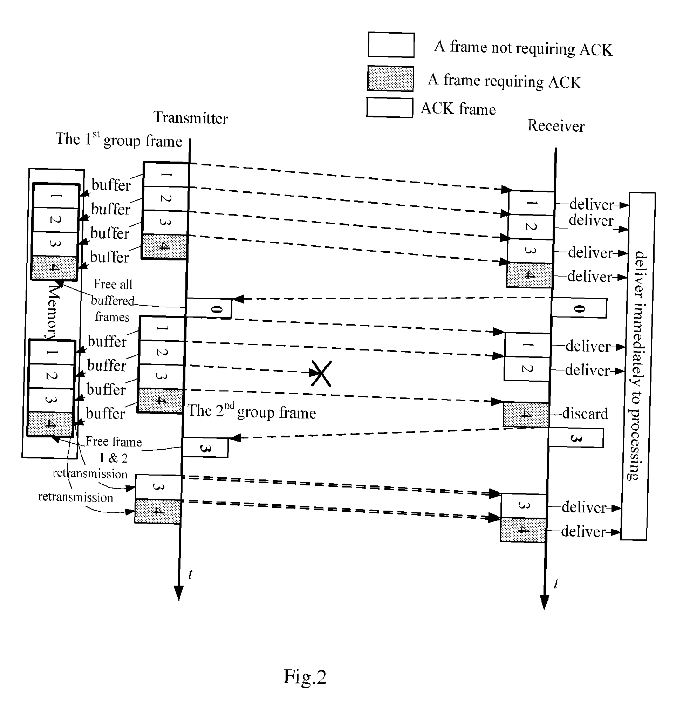

In a patent application (EP08305324.9) of the applicant, a group acknowledgment protocol is proposed to reduce the memory requirement for ADoC network. Figure 2 is an exemplary diagram showing the workflow of an embodiment of the communication method described in this patent application.

As shown in Figure 2, a transmitter transmits a plurality of frames in a group to a receiver. In the example, each group frame comprises four individual frames which are in an ordered sequence, for example, by numbering from 1 to 4, with the 1^{st} to 3^{rd} frames as those not requiring an ACK (NoNeedAckFrames) and the last frame (4^{th} one) as a frame that requiring an ACK (NeedAckFrame) in this group. Then, the transmitter transmits frames one by one in the sequence to the transmitter and buffers each frames in a memory of the transmitter. As shown in Figure 2, all the four frames of the first group frame are correctly received in sequence by the transmitter. Therefore, upon reception of the 4^{th} frame (the NeedAckFrame in this group), the receiver sends an ACK frame to inform the transmitter that no frames in the first group frame ("0") need to be retransmitted. Each frame correctly received by the receiver will be immediately delivered to further processing without buffering them in a memory of the receiver. In this example, the 3^{rd} frame of the second group frame is lost during the transmission and not received by the receiver. When the 4^{th} frame (the NeedAckFrame in the second group) arrives at the receiver, the receiver discards the 4^{th} frame and transmits an ACK frame in response to the reception of 4^{th} frame to inform the transmitter the first frame not received in sequence is the 3^{rd} frame. After receiving the ACK frame, the transmitter retransmits the 3^{rd} and 4^{th} frames of this group to the receiver.

According to this solution, the receiver doesn't need to buffer received frames but can deliver them immediately to further processing, which will reduce the consumption of memory and shorten the delay. However, the transmitter must buffer all frames in a group frame for possible retransmission. It is difficult and costly to provide a large memory capacity for ADoC network devices, especially for the STAs. A solution that can further reduce the memory capacity requirement for ADoC network is needed.

### 2. Basic approach

In view of the above problem, according to one embodiment of the present invention, a method of communication with an adjustable group ACK protocol is proposed to improve the throughput of the ADoC system and at the same time to reduce the memory capacity required by the system.

According to this embodiment, firstly, a predetermined number of frames to be transmitted to a receiver are grouped into a group frame, with the last frame indicating an end of the group. According to the embodiment, all frames in one group frame have the same destination MAC address (transmitted to the same receiver). That is, frames that will be transmitted to the same receiver can be grouped into one group frame. Among the frames in the group, the last frame that indicates the end of the group is the one requiring ACK (NeedAckFrame), and other frames are those not requiring ACK (NoNeedAckFrames).

Then, the transmitter transmits this group frame to a receiver. The receiver will receive at least one frame in this group from the transmitter.

Upon reception of the NeedAckFrame of this group by the receiver, the receiver will transmit an ACK frame to the transmitter, informing the transmitter the information of frame loss occurred during the transmission.

Upon reception of the ACK frame by the transmitter, the transmitter will adapt the group size of the subsequent group of frames according to the information in the ACK frame.

In one example, the ACK frame indicates a frame loss or no frame loss during the transmission of the group of frames. If the ACK frame indicates a frame loss, the transmitter will decrease the number of frames in the subsequent group, for example, by 1. On the other hand, if the ACK frame indicates no frame loss during the transmission of the group, the transmitter, may increase the number of frames in the subsequent group, for example, by 1.

As an alternative, if the ACK frame indicates no frame loss during the transmission of the group, the transmitter may maintain the number of frames in the subsequent groups. While if a predetermined numbers of continuous groups of frames are transmitted without frame loss, the transmitter may increase the number of frames in a subsequent group, for example, by 1.

In another example, the ACK frame indicates the number of frame loss during the transmission of the group of frames. The transmitter will adjust the group size of the subsequent group of frames based on this number. In one example, the number of frames in a subsequent sent group is decreased by a predetermined percentage, for example, by half of the number of frame loss in the sent group. Similar to the previous example, if a predetermined numbers of continuous groups of frames are transmitted without frame loss, that is, with an indication of frame loss being as zero, the transmitter may increase the number of frames in the subsequent group.

The embodiment of the present invention provides a communication method with an adjustable group ACK protocol that does not adopt a retransmission mechanism. Considering the good channel condition and anti-interference characteristic of the ADoC network, the method keeps a trade-off between frame loss rate and throughput of communication system by dynamically adjusting the size of group frame according to the feedback of the receiver on the frame loss. The invention can adapt agilely to the channel quality and required less memory capacity than the usual acknowledgement and retransmission mechanism.

### 3. Detailed workflow

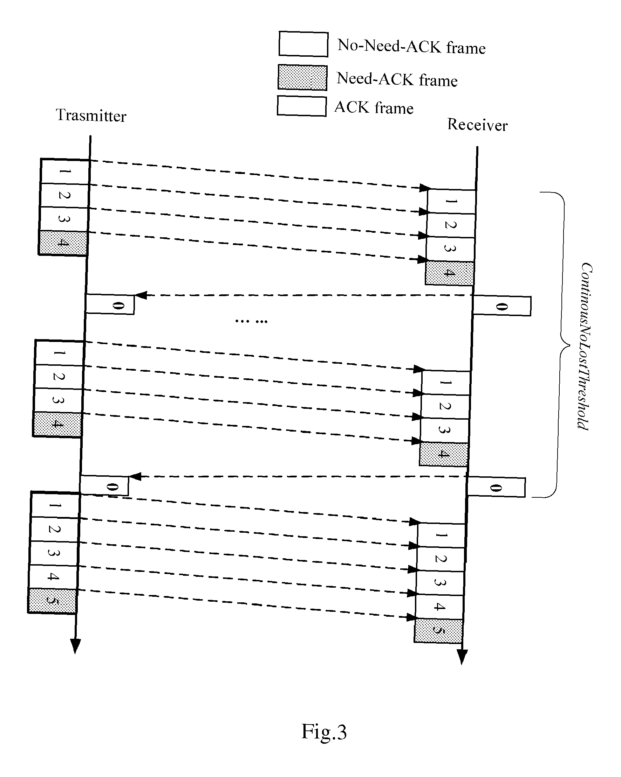

Figure 3 is an exemplary diagram showing the workflow of an example of the method of communication according to an embodiment of the present invention. The present embodiment will be described in more detail with reference to the Figure 3.

The transmitter groups a predetermined number of frames having the same destination into a group frame. Figure 3 shows, for the purpose of this embodiment, each group frame comprises four individual frames, for example, by numbering from 1 to 4, with the 1^{st} to 3^{rd} frames as those not requiring an ACK (NoNeedAckFrames) and the last frame (4^{th} one) as a frame that requiring an ACK (NeedAckFrame) in this group.

Then, the transmitter transmits frames of the first group frame to the transmitter without buffering any transmitted frames in a memory of the transmitter.

As shown in Figure 3, all the four frames in the first group frame are correctly received by the transmitter. Therefore, upon reception of the 4^{th} frame (the NeedAckFrame in this group), the receiver sends an ACK frame to inform the transmitter that the number of frame loss in the first group frame is zero ("0"). Each frame correctly received by the receiver will be immediately delivered to further processing without buffering them in a memory of the receiver.

In response to the reception of the ACK frame from the receiver, the transmitter will add 1 to a counter (ContinuousNoLostCounter) which accumulates the number of groups that do not have a frame loss, and compare the value of the ContinuousNoLostCounter with a predetermined value. In this example, the predetermined value is set as n (n ≥ 2). Because the value of the ContinuousNoLostCounter does not reach the predetermined value, the transmitter maintains the size of the second group as including 4 frames.

In Figure 3, all the frames in the second to n^{th} group frames are all correctly received by the transmitter. Similar to the above procedure, for each successive reception the transmitter will add 1 to the counter of ContinuousNoLostCounter and compare the value of the ContinuousNoLostCounter with the predetermined value n.

When the value of the ContinuousNoLostCounter reaches the predetermined value n, the size of group frame of the (n + 1)^{th} group will be increased by 1.

For the example shown in Figure 3, a maximum size of group frame can be set in advance so that the group size will not exceed a threshold even if no frame loss is occurred for many continuous groups.

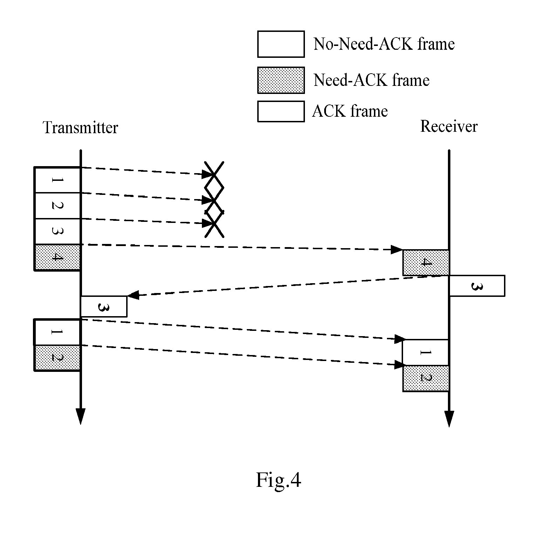

Figure 4 shows a case of the embodiment in which a frame loss happens.

As shown in Figure 4, the 1^{st} to 3^{rd} frames in the first group are lost during the transmission. Upon reception of the 4^{th} frames in this group, the receiver transmits an ACK frame to the transmitter, informing the transmitter that the number of frame loss is three. The transmitter will adjust the size of the subsequent group based on this number. In the example, the number of frames in the second group will be decreased by 2/3 of the number of frame loss in the first group. Then the size of the second group is adjusted to have two frames. A minimum number of frames in a group can also be set as 1 in this method. In such a case, the adjustable group ACK protocol goes back to a one to one ACK but without retransmission.

Therefore, according to one aspect of the embodiment, an adjustable group acknowledgment protocol is provided to implement an efficient and cost-effective transmission with decreased requirement on the memory capacity of the transmitting and receiving devices.

### 4. Implementation example in an ADoC network

Next, as an embodiment of the present invention, an ADoC network system implementing the method of the present invention will be described in detail. In the following description, a transmission in ADoC network is taken as an example, in which a transmitter transmits frames to receivers in a TDF mode.

### 4.1 ADoC transmitter

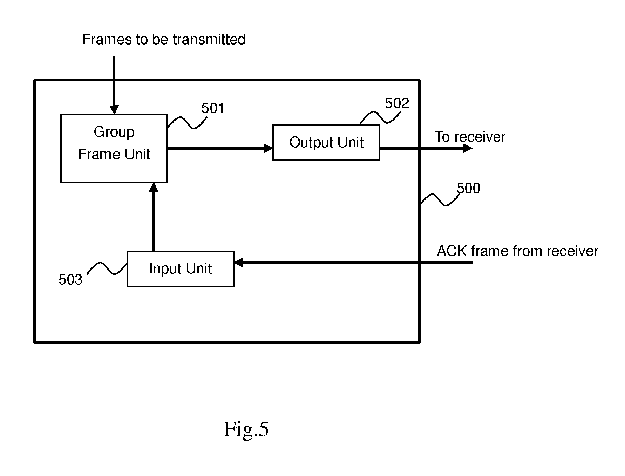

Figure 5 is an exemplary diagram showing the structure of an ADoC transmitter according to the present embodiment. As shown in Figure 5, the transmitter 500 comprises a group frame unit 501, an output unit 502 and an input unit 503. Next, function and operation of these units will be described in more detail.

### 4.1.1 Transmitter identifying frame type and generating group frame

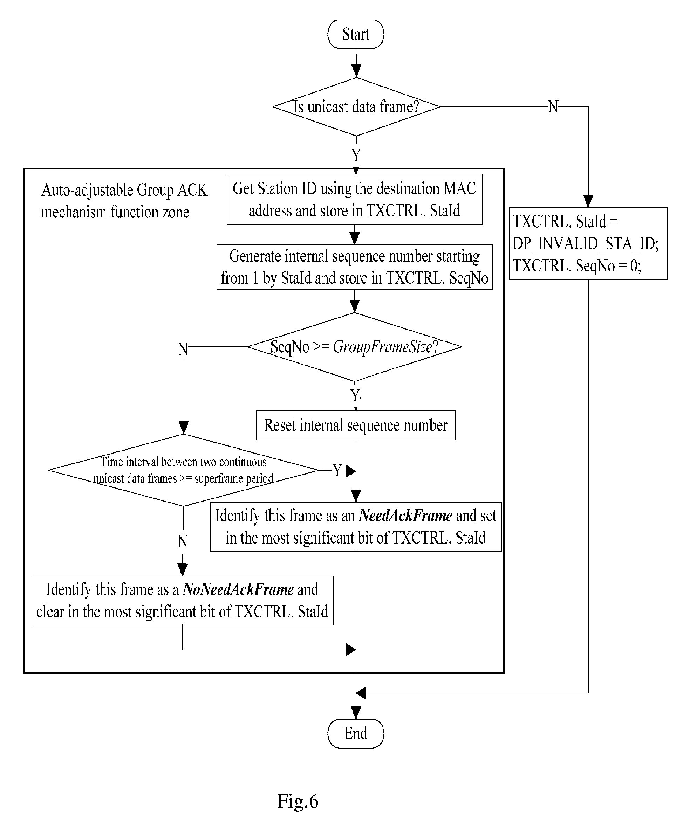

Figure 6 is a flowchart showing the procedure of the ADoC transmitter 500 identifying the frame type and generating a group frame to be transmitted.

As shown in Figure 6, the group frame unit 501 of the transmitter 500 will determine firstly whether or not the frame to be transmitted is a unicast one. The transmitter 500 will transmit frames with the group ACK protocol only when the result of this step is "Yes". If the result if "No", the group frame unit 501 will regard the frame as an invalid one for generating the group frame and directly send it to the output unit 502 to process it with an ordinary manner.

Then, according to the present embodiment, the group frame unit 501 obtains a station ID (Staid) using the destination MAC address and stores it in a register TXCTRL.Stald.

Next, the group frame unit 501 generates an internal sequence number (SeqNo) starting from 1 by Stald and stores it in a register TXCTRL.SeqNo;

Next, the group frame unit 501 determines whether the SeqNo is larger than or equal to the predetermined group frame size (GroupFrameSize).

If the result of the above step is "Yes", the group frame unit 501 will reset the internal sequence number, and then identify this frame as a NeedAckFrame and set in the most significant bit of TXCTRL.Stald.

If the result is "No", the group frame unit 501 will further determine whether time interval between two continuous frames is greater or equal to a superframe period? If the two continuous frames are greater or equal to a superframe period, the group frame unit 501 will also identify this frame as a NeedAckFrame and set in the most significant bit of TXCTRL.Stald as described. Otherwise, the group frame unit will identify this frame as a NoNeedAckFrame and clear the most significant bit of TXCTRL.Stald.

Accordingly, unicast frames having a same address will be grouped into a group frame with a predetermined group size. Each group frame comprises a plurality of NoNeedAckFrames and one NeedAckFrame.

Next, the output unit 502 transmits the group of frames in the sequence to the receiver.

### 4.1.2 Structure of the frame carrying the group ACK information

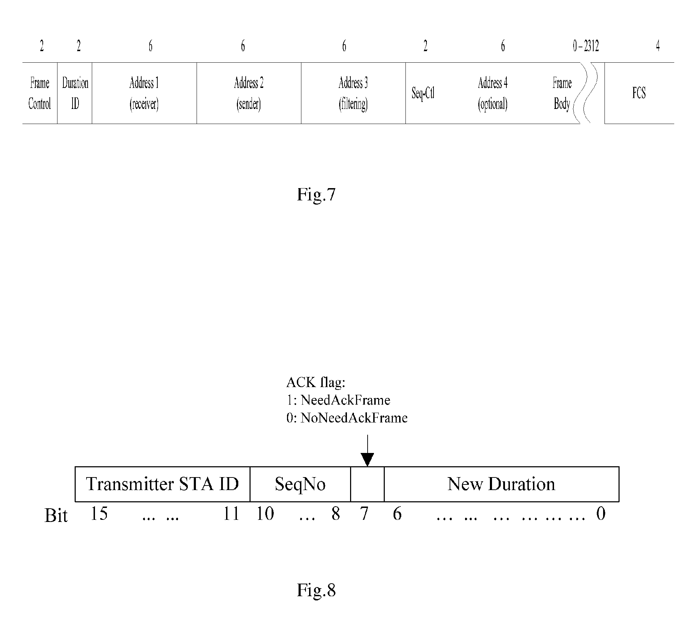

In the present embodiment, a data frame of 802.11 is redefined to carrying the group ACK information. One example of the generic structure of data frame in 802.11 is shown in Figure 7.

Figure 8 is a diagram showing the redefined structure of a part of the data frame carrying group ACK information.

As shown in Figure 8, according to the present embodiment, the Duration Field of a data frame according to the 802.11 is redefined as shown to carry group ACK information. As seen from the Figure 8, bit 15 to 11 is the transmitter's STA ID (station identifier). Bit 10 to 8 store the internal sequence number (SeqNo), for example, from 1 to 4. Bit 7 is the ACK flag, for example, in this case 0 denotes a NoNeedAckFrame and 1 denotes a NeedAckFrame that requires an ACK frame from the receiver. As shown in Figure 8, bit 6 to 0 is the New Duration subfield.

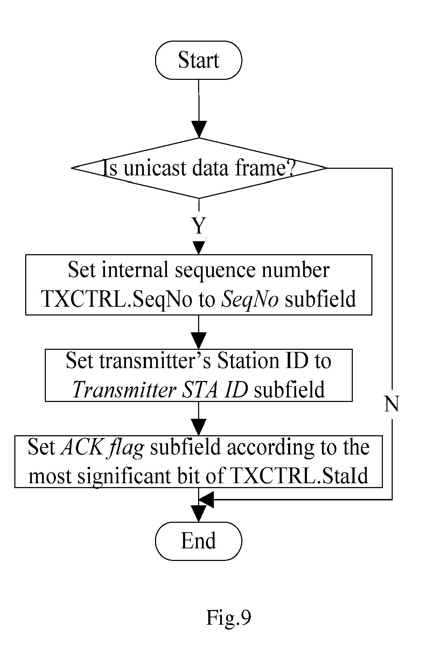

The setting procedure for these subfields is shown in the flowchart of Figure 9.

The group frame unit 501, in the first step, determines whether the frame is a unicast one.

If "Yes", then the group frame unit 501 sets the internal sequence number TXCTRL.SeqNo to SeqNo subfield;

Next, the group frame unit 501 sets the station ID to the Transmitter STA ID subfield.

Finally, the group frame unit 501 sets the ACK flag subfield according to the most significant bit of TXCTRL.Stald.

Although a specific frame structure with the redefined Duration Field carrying the ACK information is shown and described, it is obvious for those skilled in the art that many other structures are also possible for implementing the solution under the principle of the present invention. In addition, only part of the frame is shown in the description. The data frame can also comprise other fields to implement the transmission. The other parts of the data frame are not described because they are not crucial in the context of the present embodiment.

### 4.1.3 Transmitter adapting the size of subsequent groups

After the group frame is generated, the output unit 502 coupled to the group frame unit 501 will transmit the frames of the group in sequence to the receiver.

If the frame is a NeedAckFrame, the input unit 503 of the transmitter waits to get a number of the frame loss during transmission ('LossNum') in an ACK frame for the NeedAckFrame from the receiver.

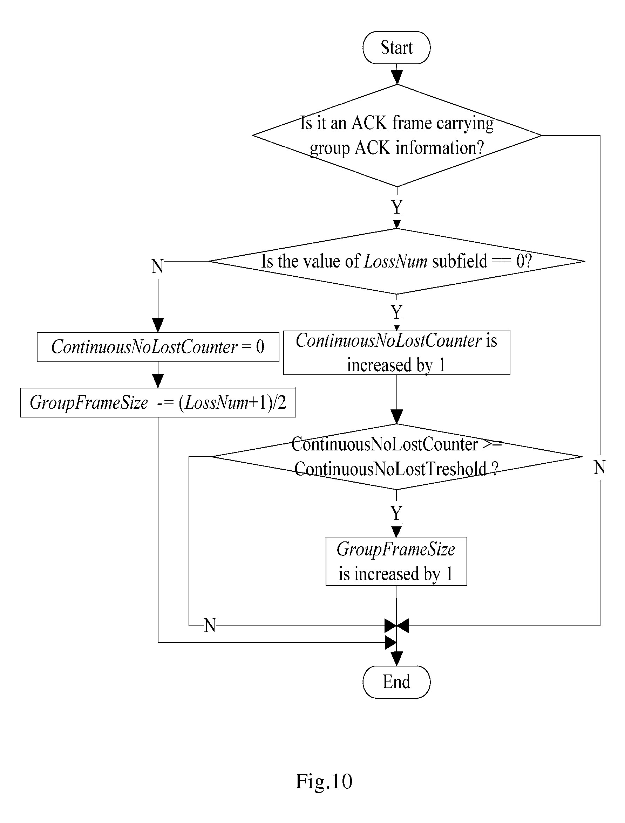

Figure 10 shows the procedure of the transmitter 500 receiving an ACK frame from the receiver and adapting the size of subsequent groups.

As shown in Figure10, firstly, the group frame unit 501 of the transmitter 500 determines whether a received frame is an ACK frame carrying frame loss information. If the result is Yes, the group frame unit 501 determines whether the value of LossNum subfield of the ACK frame is equal to 0. If the value is not equal to 0, the group frame unit 501 will adjust the number of frames in a group frame ("GroupFrameSize") ,for example, as "GroupFrameSize - (LossNum + 1)/2". If the value if equal to 0, a counter of the transmitter 500 (ContinuousNoLossCounter) is increased by 1 and then the value of the counter is compared with a predetermined value (ContinuousNoLossThreshold). If the value of the counter is equal to the ContinuousNoLossThreshold, the group frame unit 501 will increase the GroupFrameSize by 1. If the value of the counter is smaller than the ContinuousNoLossThreshold, the group frame unit 501 will remain the GroupFrameSize for the subsequent group.

### 4.2 ADoC receiver

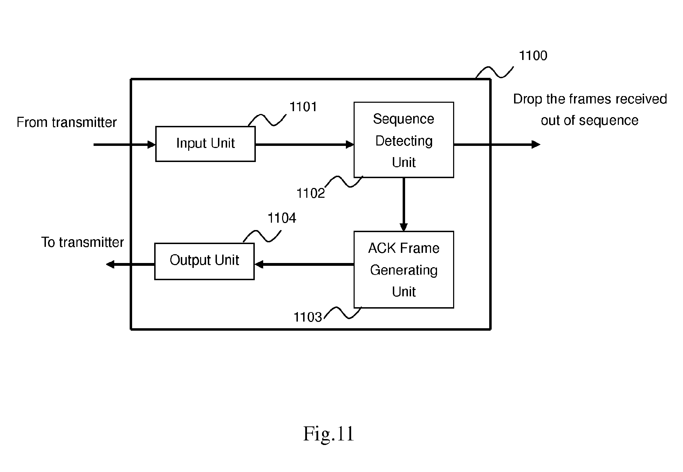

As shown in the block diagram of Figure 11, the receiver 1100 comprises an input unit 1101, a sequence detecting unit 1102, an ACK frame generating unit 1103 and an output unit 1104. Next, function and operation of these units will be described in more detail.

### 4.2.1 Receiver processing group ACK information in the received frames

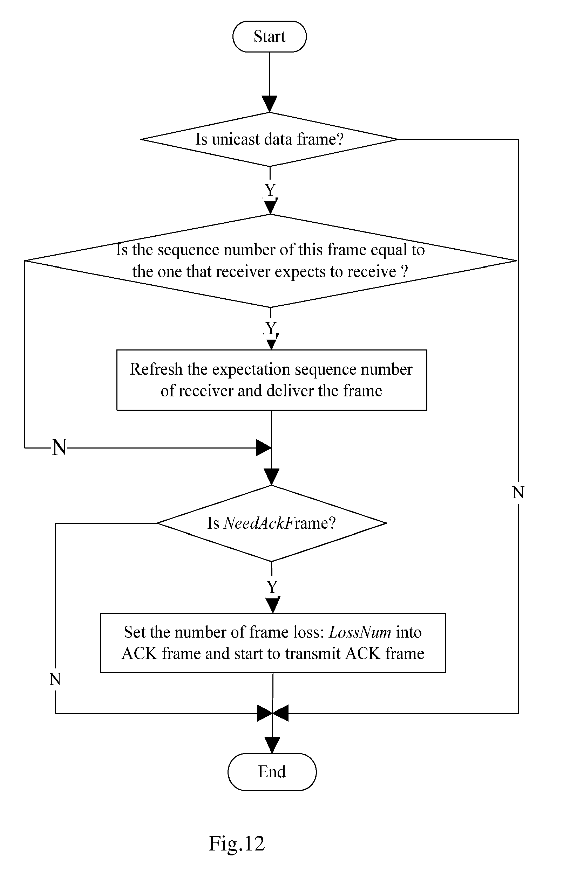

As shown in Figure 11, the receiver 1100 comprises an input unit 1101 for receiving frames from the transmitter. When the input unit 1101 receives a frame, it will check the frame type and process the information in the frame, as shown in Figure 12.

Figure 12 shows the procedure of the receiver 1100 processing group ACK information in received data frames.

The input unit 1101 will firstly determine whether the received frame is a unicast one. If the result is "No", the receiver 1100 will process the frame in a usual manner.

If the received frame is a unicast one, the sequence detecting unit 1102 coupled to the input unit 1101 of the receiver 1100 will determine whether the sequence number of this frame is equal to the one that the receiver expects to receive in accordance with the sequence.

If the result is "Yes", the sequence detecting unit 1102 will refresh the expectation sequence number of the receiver and deliver the frame to further processing.

For all the received frames, the acknowledgement frame generating unit 1103 will judge whether it is a NeedAckFrame. If the received frame is a NeedAckFrame, the acknowledgement frame generating unit 1103 will generate an ACK frame, getting the sequence number of the frame that it expects to receive ('ExpectSeqNo') from the sequence detecting unit 1102 and compare it with the sequence number of the NeedAckFrame to determine how many frames in this group were lost during the transmission. Then the acknowledgement frame generating unit 1103 inserts the number of frame loss ('LossNum') into the ACK frame. The output unit 1104 of the receiver 1100 then sends the ACK frame to the transmitter.

As previously described, the transmitter will adapt the size of the subsequent groups based on the number of frame loss in the ACK frame.

The receiver 1100 also can comprises a time-out controller (not shown) for controlling the output unit 1104 to transmit the acknowledge frame to the transmitter in response to an expiration of a predetermined time interval. Therefore, in the condition that the NeedAckFrame is lost during transmission, the receiver 1100 can also transmit an acknowledgement frame to trigger the group size adaption.

### 4.2.2 Structure of an ACK frame carrying group ACK information

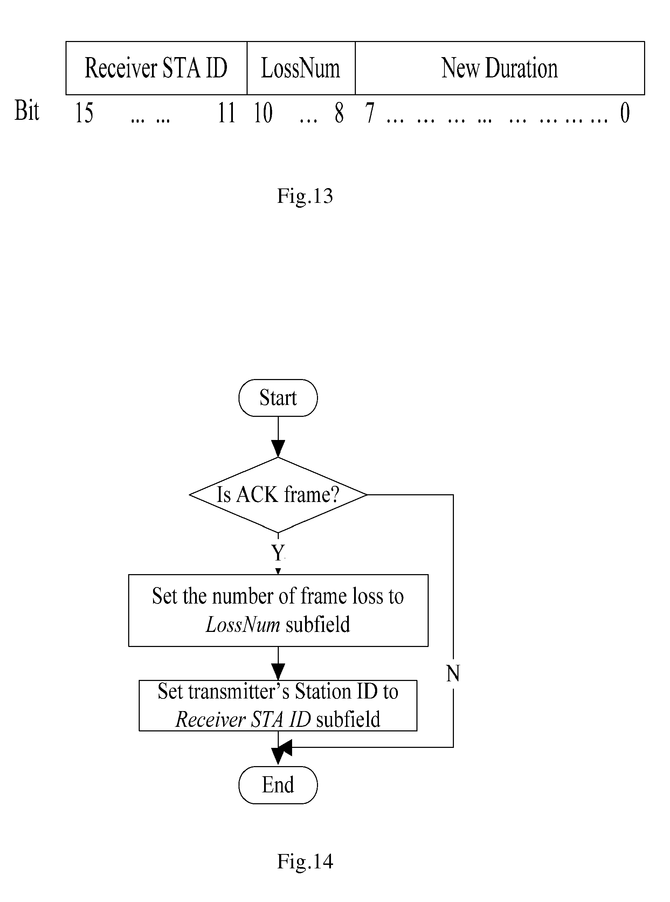

Figure 13 is a diagram showing the structure of an ACK frame carrying group ACK information. The ACK frame is also redefined based on a generic data frame defined in 802.11, as described in Figure 7.

In this example, the Duration field is redefined as ACK frame to carry group ACK information. As shown in Figure 13, bit 15 to 11 is the receiver STA ID, bit 10 to 8 store the number of frame loss in the transmitted group ('LossNum') and the remaining bits (7 to 0) are used for new Duration Field.

Figure 14 is a flowchart showing the steps carried out by the receiver 1100 for setting the subfields of a data frame for use as ACK frame.

As shown in Figure 14, the ACK frame generating unit 1103 of the receiver 1100 will determine whether it is a frame requiring acknowledgment.

If the result is "Yes", the number of frame loss of the transmitted group will be set to the LossNum subfield as shown in Figure 14.

The transmitting station ID also will be set to the receiver's STA ID subfield.

Other acknowledgment frame structures may be used.

While the embodiments are presented in the context of the ADoC network system with TDF, those skilled in the art will recognize that the principles of the invention are applicable to other communication systems which share transmission medium.

It is to be understood that numerous modifications may be made to the illustrative embodiments and that other arrangements may be devised without departing from the spirit and scope of the present invention as defined by the appended claims.

For example, in the present embodiment, the ACK protocol is only applicable to the unicast frames because the ADoC network transmits frames in conformity with 802.11 protocol which prescribes that ACK mechanism only refers to unicast frame and not to frames of other types, for example multicast and broadcast ones. However, the present invention is not limited to unicast frames. In network systems that permit other types of frames to use ACK mechanism, the present invention can also be applied to multicast or broadcast transmission of a block to several receivers. For example, the transmitter can broadcast a group of frames to a plurality of receivers. Then each receiver will transmit an ACK frame to the transmitter, informing the frame loss information of each transmission. The transmitter can dynamically adapting the number of frames in subsequently sent groups based on the information indicated in one of the acknowledgement frames according to a predetermined algorithm. As one example, the transmitter can choose the information of the largest frame loss rate as the basis of the group size adjustment.

Additionally, in the embodiment for the ADoC transmitter and receiver, the transmitter transmits a group of frames in an ordered sequence to the receiver for the receiver to identify a frame loss. However, other method for identifying the frame loss and obtaining the frame loss number may also be used. At the receiver end of the embodiment, a frame in a group that is not received in sequence is identified as a lost frame and calculated into the number of frame loss. But other criteria for deciding whether a frame is lost can also be used.

## Claims

1. A method of communication between a transmitter and a receiver, **characterized by** the steps of, at the level of the transmitter:
transmitting a group of frames to the receiver, concluding with a last frame indicating an end of the group; and
upon reception of an acknowledgement frame transmitted from the receiver, said acknowledgment frame including frame loss information of the sent group, dynamically adapting the number of frames in subsequently sent groups based on the frame loss information.

2. The method according to claim 1, wherein the number of frames in a subsequent sent group is decreased in response to an indication by the frame loss information of at least one frame loss in the sent group

3. The method according to claim 1, wherein the number of frames in a subsequent sent group is increased in response to an indication by the frame loss information of no frame loss in the sent group.

4. The method according to claim 1, wherein the number of frames in a subsequent sent group is increased in response to at least two continuous indications by the frame loss information of no frame loss for sent groups.

5. The method according to claim 1, wherein the frame loss information comprises an indication of the number of frame loss in the sent group and the number of frames in a subsequent sent group is decreased by a predetermined percentage of the number of frame loss in the sent group.

6. The method according to claim 1, wherein the frame loss information comprises an indication of the number of frame loss in the sent group and the number of frames in a subsequent sent group is increased in response to at least two indications of zero of frame loss for continuous sent groups.

7. A method of communication between a transmitter and a plurality of receivers, **characterized by** the steps of, at the level of the transmitter:
transmitting a group of frames to the plurality of receivers, concluding with a last frame indicating an end of the group; and
upon reception of acknowledgement frames transmitted from the plurality of receivers, said acknowledgment frames including respectively the number of frame loss of the sent group of each of the receivers, dynamically adapting the number of frames in subsequently sent groups based on the number of frame loss indicated in one of the acknowledgement frames.

8. The method according to claim 7, wherein the dynamical adaption is based on the largest number of frame loss among those indicated in the plurality of acknowledgement frames.

9. The method according to claim 7 or 8, wherein the number of frames in a subsequent sent group is decreased by a predetermined percentage of the number of frame loss indicated in the acknowledgement frame.

10. The method according to claim 8, wherein the number of frames in a subsequent sent group is increased when the largest number of frame loss is zero.

11. A method of communication between a transmitter and a receiver, **characterized by** the steps of, at the level of the receiver:
receiving a frame of a group of frames transmitted from the receiver, concluding with a last frame indicating an end of the group of frames; and
upon reception the last frame of the transmitted group, transmitting an acknowledgement frame including frame loss information of the transmitted group to the transmitter for the transmitter to dynamically adapt the number of frames in subsequently sent groups.

12. The method according to claim 11, wherein the frame loss information comprises an indication of at least one frame loss or no frame loss in the sent group.

13. The method according to claim 11, wherein the frame loss information comprises an indication of the number of frame loss in the sent group.

14. A transmitter (500), comprising
a communication interface (502, 503) for exchanging frames with a receiver; and
a processor (501), **characterized in that,**
the communication interface (502, 503) being adapted to transmit a group of frames to the receiver, concluding with a last frame indicating an end of the group; and
upon reception of an acknowledgement frame transmitted from the receiver, said acknowledgment frame including frame loss information of the sent group, the processor (501) being adapted to change the number of frames in subsequently sent groups based on the frame loss information.

15. A receiver (1100), comprising
a communication interface (1101, 1104) for exchanging frames with a transmitter; and
a processor (1102, 1103), **characterized in that,**
the communication interface (502, 503) being adapted to receive a group of frames from the transmitter, concluding with a last frame indicating an end of the group; and
the processor (1102, 1103) being adapted to determine frame loss information of the received group and instructs the communication interface (502, 503) to transmit an acknowledgement frame including frame loss information of the transmitted group to the transmitter for the transmitter to dynamically adapt the number of frames in subsequently sent groups.
